(19) **Europäisches Patentamt**
**European Patent Office**
**Office européen des brevets**

(11) **EP 4 279 269 A1**

(12) **EUROPEAN PATENT APPLICATION**
published in accordance with Art. 153(4) EPC

(43) Date of publication:
**22.11.2023 Bulletin 2023/47**

(21) Application number: **21919671.4**

(22) Date of filing: **16.12.2021**

(51) International Patent Classification (IPC):
**B32B 27/32** (2006.01) **B65D 65/40** (2006.01)
**C08L 23/06** (2006.01) **C08L 23/14** (2006.01)
**C08L 53/00** (2006.01) **C08J 5/18** (2006.01)

(52) Cooperative Patent Classification (CPC):
**B32B 27/32; B65D 65/40; C08J 5/18; C08L 23/06;
C08L 23/14; C08L 53/00**

(86) International application number:
**PCT/JP2021/046572**

(87) International publication number:
**WO 2022/153783 (21.07.2022 Gazette 2022/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.01.2021 JP 2021005136**

(71) Applicant: **TOYOBO CO., LTD.
Osaka-shi
Osaka 5300001 (JP)**

(72) Inventors:
• **TOMATSU, Wakato
Inuyama-shi Aichi 484-8508 (JP)**
• **NISHI Tadashi
Inuyama-shi Aichi 484-8508 (JP)**

(74) Representative: **Vossius & Partner
Patentanwälte Rechtsanwälte mbB
Siebertstraße 3
81675 München (DE)**

(54) **POLYOLEFIN RESIN FILM AND LAMINATE**

(57) An object of the present invention is to provide a polyolefin-based resin film that allows, even when the polyolefin-based resin film is laminated with a base film having a large strain in the molecular orientation axis such as a biaxially stretched polyamide-based resin film, a packaging bag obtained from a laminated body thereof to be excellent in straight cuttability and ease of tearing, less likely to be broken when the bag has fallen even after having been subjected to retorting treatment, and excellent in slipperiness. A polyolefin-based resin film formed from a polypropylene-based resin composition, a polyolefin-based resin forming the polypropylene-based resin composition containing: in a total of 100 parts by weight of the polyolefin-based resin forming the polypropylene-based resin composition, 55 to 80 parts by weight of a propylene-ethylene block copolymer; not smaller than 10 parts by weight and not larger than 30 parts by weight of a propylene-a olefin random copolymer; and not smaller than 10 parts by weight and not larger than 30 parts by weight of a linear low-density polyethylene having a melting point of not lower than 112°C and not higher than 130°C, wherein the polyolefin-based resin film has an orientation coefficient ΔNx in a longitudinal direction of not smaller than 0.0120 and not larger than 0.0250.

**Description**

TECHNICAL FIELD

The present invention relates to a polyolefin-based resin film. Further, the present invention relates to a laminated body comprising the polyolefin-based resin film and at least one type of a base film selected from the group consisting of a polyamide-based resin film, a polyester-based resin film, and a polypropylene-based resin film.

BACKGROUND ART

A packaging bag is produced by thermocompression bonding (hereinafter, referred to as heat-sealing) of the peripheral edges of a laminated body mainly including a base film such as a polyamide-based resin film, a polyester-based resin film, or a polypropylene-based resin film and a polyolefin-based resin film at a temperature close to the melting point of the polyolefin-based resin film in a state where the peripheral edges of the polyolefin-based resin film are in contact with each other.

As food packaging bags, so-called retort pouches suitable for long-term food storage are widely used. Such food packaging bags are sterilized by pressurized steam at about 130°C after food is packed therein.

Against the backdrop of women's participation in society, a trend toward the nuclear family, and aging society, demand for retort pouches has recently increased, and at the same time, retort pouches are required to have improved properties.

For example, such retort pouches are recently often packed in boxes during transportation before sold in stores, and are therefore required to be less likely to break even when dropped in such a process, particularly even when dropped under refrigeration.

Further, when a food content is taken out of a packaging bag, particularly a retort pouch, the packaging bag is often torn with fingers from an incision that is so-called a notch made in the peripheral heat-sealed portion of the packaging bag. However, when a conventional laminated body is used, there is a fear that a packaging bag cannot be torn in parallel with one edge of the packaging bag, usually in parallel with the horizontal direction and is therefore obliquely torn, or a phenomenon called "Nakiwakare" occurs in which the front-side laminated body and the back-side laminated body of a packaging bag are opposite in tearing direction in the vertical direction, and therefore it is difficult to take out a food content, a food content makes fingers or clothing dirty, or fingers are burned when a food content has been heated.

The reason why it is difficult to tear the packaging bag in parallel with one edge of the packaging bag is that a base film used for the laminated body is distorted, that is, the molecular orientation axis direction of the base film is not parallel with one edge of the packaging body.

Such a problem does not occur if the molecular orientation axis direction of the base film can be made the same with the tearing direction of the packaging bag. The molecular orientation axis direction of the widthwise center of a produced wide stretched film is coincident with the machine direction of the film, and therefore a resulting packaging bag can be torn in parallel with one edge of the packaging bag. However, the molecular orientation axis direction of the widthwise end of the base film is inclined from the machine direction of the film, and therefore the tearing direction of a resulting packaging bag is inclined in the molecular orientation axis direction of the base film even if the film is processed so that the machine direction of the film matches the longitudinal or transverse direction of the packaging bag. It is practically impossible to completely avoid the procurement of a base film using the widthwise end of film. In addition, the degree of distortion tends to be larger than ever before due to an increase in the production speed or width of a base film.

Therefore, attempts have been made to solve such a problem by devising a polyolefin-based resin film to be laminated on a base film.

Patent Document 1 discloses a film obtained by uniaxially stretching a polyolefin-based resin sheet containing an ethylene-propylene block copolymer and an ethylene-propylene copolymer elastomer 3.0 times or less. However, there is a room for improvement in tear strength and there is a problem that "Nakiwakare" is likely to occur.

Patent Document 2 discloses a film obtained by uniaxially stretching a polyolefin-based resin sheet mainly containing a propylene-ethylene block copolymer about 4 times. There is a problem in bag-breaking resistance, and in insufficient performance when the weight of the content is large.

PRIOR ART DOCUMENTS

PATENT DOCUMENTS

Patent Document 1: Japanese Patent No. 5790497

Patent Document 2: WO2019/123944A1

SUMMARY OF THE INVENTION

PROBLEM TO BE SOLVED BY THE INVENTION

It is an object of the present invention to provide a polyolefin-based resin film such that a packaging bag obtained from a laminated body has excellent straight cuttability and ease of tearing, is less likely to break due to dropping when the bag has fallen even after having been subjected to retorting treatment, and is excellent in slipperiness even if the laminated body is obtained by laminating the polyolefin-based resin film on a base film whose molecular orientation axis is greatly distorted, such as a biaxially-stretched polyamide-based resin film.

SOLUTION TO THE PROBLEM

In order to attain the object, the present inventors conducted thorough studies and found that a polyolefin-based resin film as below could be obtained, and completed the present invention. That is, the polyolefin-based resin film is formed from a polypropylene-based resin composition and includes a propylene-ethylene block copolymer, a propylene-a olefin random copolymer, and in addition, an ethylene-propylene copolymer elastomer, and a propylene-butene copolymer elastomer. In the polyolefin-based resin film, although polymer molecules are caused to be oriented mainly in one direction by stretching, heat shrinkage ratio in each direction is reduced and orientation of molecular chain in the longitudinal direction is caused to fall within a specific range. Accordingly, even when the polyolefin-based resin film is laminated with a base material film having a large strain in the molecular orientation axis such as a biaxially stretched polyamide-based resin film, a packaging bag obtained from a laminated body of the polyolefin-based resin film and the base material film is excellent in straight cuttability and ease of tearing, and is less likely to be broken when the bag has fallen even after having been subjected to retorting treatment.

That is, the present invention has the following aspects.

[1] A polyolefin-based resin film formed from a polypropylene-based resin composition, a polyolefin-based resin forming the polypropylene-based resin composition containing: in a total of 100 parts by weight of the polyolefin-based resin forming the polypropylene-based resin composition, 55 to 80 parts by weight of a propylene-ethylene block copolymer; not smaller than 10 parts by weight and not larger than 30 parts by weight of a propylene-$\alpha$ olefin random copolymer; and not smaller than 10 parts by weight and not larger than 30 parts by weight of a linear low-density polyethylene having a melting point of not lower than 112°C and not higher than 130°C, wherein the polyolefin-based resin film has an orientation coefficient $\Delta Nx$ in a longitudinal direction of not smaller than 0.0120 and not larger than 0.0250 and tear strength in the longitudinal direction is 1000 mN or less.

[2] The polyolefin-based resin film according to the above [1], wherein the polyolefin-based resin film has a haze of not lower than 10% and not higher than 45%.

[3] The polyolefin-based resin film according to the above [1] or [2], wherein the polyolefin-based resin film has a piercing strength of not smaller than 5 N and not larger than 15 N.

[4] The polyolefin-based resin film according to any one of the above [1] to [3], wherein the polyolefin-based resin film has a static friction coefficient of not smaller than 0.2 and not larger than 1.5.

[5] The polyolefin-based resin film according to any one of the above [1] to [4], wherein the polypropylene-based resin composition contains: in a total of 100 parts by weight of the polyolefin-based resin forming the polypropylene-based resin composition, not smaller than 3 parts by weight and not larger than 10 parts by weight of at least one type of a copolymer elastomer selected from the group consisting of an ethylene-propylene copolymer elastomer, a propylene-butene copolymer elastomer, an ethylene-butene copolymer elastomer, and a styrene-based copolymer elastomer.

[6] A laminated body comprising: the polyolefin-based resin film according to any one of the above [1] to [5]; and a biaxially oriented film formed from at least one type of a polymer selected from the group consisting of a polyamide-based resin film, a polyester-based resin film, and a polypropylene-based resin film.

[7] A packaging body formed from the laminated body according to the above [6].

[8] The packaging body according to the above [7], wherein "Nakiwakare" is not larger than 5 mm.

[9] The packaging body according to the above [8] to be used for retort food.

EFFECT OF THE INVENTION

The polyolefin-based resin film of the present invention is a packaging body excellent in straight cuttability and ease of tearing, is less likely to be broken when the bag has fallen even after having been subjected to retorting treatment, and is excellent in slipperiness. The polyolefin-based resin film of the present invention is particularly suitable for retort pouches.

MODE FOR CARRYING OUT THE INVENTION

Hereinbelow, the present invention will be described in detail.

(Propylene-ethylene block copolymer)

In the present invention, a propylene-ethylene block copolymer can be used. The propylene-ethylene block copolymer used in the present invention is a multi-stage copolymer obtained through a first-stage polymerization step in which a copolymer component containing a large amount of propylene and a small amount of ethylene is obtained and a second-stage polymerization step in which a copolymer component containing a small amount of propylene and a large amount of ethylene is obtained. More specifically, a propylene-ethylene block copolymer obtained by gas-phase polymerization is preferably used as shown in JP-A-2000-186159. That is, the multi-stage copolymer may be a block copolymer obtained by forming a polymer portion (component A) mainly containing propylene by polymerization in the presence of substantially no inert solvent in a first step and then forming a propylene-ethylene copolymer portion (component B) having an ethylene content of 20 to 50 parts by weight by polymerization in a gas phase in a second step, but is not limited thereto.

A melt flow rate (MFR) (as measured at 230°C and a load of 2.16 kg) of the propylene-ethylene block copolymer is preferably 1 to 10 g/10 min, more preferably 2 to 7 g/10 min. If the melt flow rate is 1 g/10 min or more, extrusion through a T-die is easy. On the other hand, if the melt flow rate 10 g/10 min or less, impact strength is likely to improve.

In the present invention, a portion soluble in xylene at 20°C is called CXS, and a portion insoluble in xylene at 20°C is called CXIS. In the propylene-ethylene block copolymer used in the present invention, CXS mainly contains a rubber component (component B) and CXIS mainly contains a polypropylene component (component A). When the limiting viscosity of CXS and the limiting viscosity of CXIS are defined as $[\eta]$CXS and $[\eta]$CXIS, respectively, $[\eta]$CXS is preferably in the range of 1.8 to 3.8 dl/g, more preferably in the range of 2.0 to 3.1 dl/g. If $[\eta]$CXS is 3.8 dl/g or less, fish eyes are less likely to occur in the polyolefin-based resin film. On the other hand, if $[\eta]$CXS is 1.8 dl/g or more, heat-sealing strength when two sheets of the polyolefin-based resin film are heat-sealed is less likely to be significantly reduced.

On the other hand, $[\eta]$CXIS is preferably in the range of 1.0 to 3.0 dl/g. If $[\eta]$CXIS is 3.0 dl/g or less, extrusion through a T-die is easy. On the other hand, if $[\eta]$CXIS is 1.0 dl/g or more, impact strength is likely to improve.

The above-described $[\eta]$CXS and $[\eta]$CXIS are values measured by the following measurement method. First, 5 g of a sample is completely dissolved in 500 mL of boiling xylene, and then the temperature of the resulting solution is decreased to 20°C, and the solution is allowed to stand for 4 hours or more. Then, the solution is separated into a filtrate and a precipitate by filtration, and the limiting viscosity ($[\eta]$) of a component (CXS) obtained by drying and solidifying the filtrate and the limiting viscosity ($[\eta]$) of a solid (CXIS) obtained by drying the precipitate at 70°C under reduced pressure are measured in tetralin at 135°C using an Ubbelohde-type viscometer.

It is generally known that MFR and the limiting viscosity $\eta$ of an overall film correlate with each other. The MFR of a resin used can approximately be known by knowing $\eta$ of a film. $\eta$ gives an indication of molecular weight, and a larger value of $\eta$ indicates a larger molecular weight, and a smaller value of $\eta$ indicates a smaller molecular weight. MFR gives an indication of molecular weight, and a smaller value of MFR indicates a larger molecular weight, and a larger value of MFR indicates a smaller molecular weight.

The copolymerization ratio of an ethylene component in the propylene-ethylene block copolymer is preferably 1 to 15% by weight, preferably 3 to 10% by weight. The copolymerization ratio of a propylene component in the propylene-ethylene block copolymer is preferably 85 to 99% by weight, preferably 90 to 97% by weight.

The lower limit of melting point of the propylene-ethylene block copolymer is not particularly limited, but is preferably 120°C, more preferably 125°C. If the melting point is 120°C or higher, heat resistance is easy to be improved or the inner surfaces of a bag are less likely to be fused together when the bag is subjected to retort treatment. The upper limit of melting point of the propylene-ethylene block copolymer is not particularly limited, but is preferably 175°C, more preferably 170°C. If the melting point is 175°C or lower, heat-seal temperature is likely to be low.

Specific examples of the propylene-ethylene block copolymer include a block copolymerized polypropylene resin having an ethylene content of 7% by weight and a limiting viscosity $\eta$ of CXS of 3.0 dl/g (MFR at 230°C and a load of 2.16 kg: 3.0 g/10 min, melting point: 164°C, WFS5293-22 manufactured by Sumitomo Chemical Co., Ltd) and a block copolymerized polypropylene resin having an ethylene content of 6% by weight and a limiting viscosity $\eta$ of CXS of 2.3 dl/g (MFR at 230°C and a load of 2.16 kg: 3.0 g/10 min, melting point: 164°C, WFS5293-29 manufactured by Sumitomo Chemical Co., Ltd).

(Propylene-a olefin random copolymer)

In the present invention, a propylene-$\alpha$ olefin random copolymer is preferably added for the purpose of decreasing the heat-seal temperature of the polyolefin-based resin film.

Examples of the propylene-a olefin random copolymer include copolymers of propylene and at least one C2 to C20 $\alpha$-olefin other than propylene. Examples of the C2 to C20 $\alpha$-olefin monomer to be used include ethylene, butene-1, pentene-1, 4-methyl-pentene-1, hexene-1, and octene-1. The C2 to C20 $\alpha$-olefin monomer is not particularly limited, but is preferably ethylene in terms of compatibility with the propylene-ethylene block copolymer. If necessary, two or more propylene-$\alpha$ olefin random copolymers may be used in combination. The propylene-$\alpha$ olefin random copolymer is particularly preferably a propylene-ethylene random copolymer. In this description, random copolymers are listed in descending order of monomer composition ratio.

The lower limit of melt flow rate (MFR) of the propylene-$\alpha$ olefin random copolymer at 230°C and a load of 2.16 kg is preferably 0.6 g/10 min, more preferably 1.0 g/10 min, even more preferably 1.2 g/10 min. If the MFR is 0.6 g/10 min or more, compatibility with the propylene-ethylene block copolymer is high so that blushing of the film is less likely to occur. The upper limit of melt flow rate of the propylene-a olefin random copolymer is preferably 10.0 g/10 min, more preferably 8.0 g/10 min, even more preferably 7.0 g/10 min.

The copolymerization ratio of an ethylene component in the propylene-a olefin random copolymer is preferably 1 to 15% by weight, preferably 3 to 10% by weight. The copolymerization ratio of a propylene component in the propylene-ethylene random copolymer is preferably 85 to 99% by weight, preferably 90 to 97% by weight.

The lower limit of melting point of the propylene-a olefin random copolymer is preferably 120°C, more preferably 125°C. If the melting point is 120°C or lower, the inner surfaces of a bag may be fused together when the bag is subjected to retort treatment. The upper limit of melting point of the propylene-a olefin random copolymer is preferably 145°C, more preferably 140°C. If the melting point is 145°C or lower, heat-seal temperature is likely to low.

Specific examples of the propylene-a olefin random copolymer include: S131 manufactured by Sumitomo Chemical Co., Ltd. (ethylene content: 5.5% by weight, density: 890 kg/m$^3$, MFR at 230°C and 2.16 kg: 1.5 g/10 min, melting point: 132°C, Ziegler-Natta catalyst), Propylene-ethylene random copolymer WFW4M manufactured by Japan Polypropylene Corporation (ethylene content: 7% by weight, density: 900 kg/m$^3$, MFR at 230°C and 2.16 kg: 7.0 g/10 min, melting point: 136°C, metallocene catalyst), and the like.

The propylene homopolymer containing the metallocene-based olefin polymerization catalyst is characterized by having: when compared with a propylene homopolymer containing a Ziegler-Natta-based olefin polymerization catalyst, a narrower molecular weight distribution; and less components on the low molecular weight side and less components on the high molecular weight side with respect to the weight-average molecular weight as an index. In addition, it was newly found that when the propylene homopolymer containing the metallocene-based olefin polymerization catalyst is used, occurrence of whiskers are suppressed. Further, flexibility and strength are excellent.

It is noted that the metallocene-based olefin polymerization catalyst is a catalyst composed of (i) a transition metal compound (so-called metallocene compound) of group 4 of the periodic table containing a ligand having a cyclopentadienyl skeleton; (ii) a co-catalyst that reacts with the metallocene compound to be able to realize activation to a stable ionic state; and, as necessary, (iii) an organoaluminum compound, and any publicly-known catalyst can be used.

(Linear low-density polyethylene)

When a polypropylene-based resin composition forming a core layer contains a linear low-density polyethylene, the bag-breaking resistance thereof can be improved. The linear low-density polyethylene can be manufactured by a manufacturing method such as a highpressure process, a solution method, or a gas-phase method. An example of the linear low-density polyethylene is a copolymer of ethylene and at least one type of an a olefin having 3 or more carbon atoms. The $\alpha$ olefin may be one referred to as $\alpha$ olefin in general, and an $\alpha$ olefin having 3 to 12 carbon atoms such as propylene, butene-1, hexene-1, octene-1, or 4-methyl-1-pentene is preferable. Examples of the copolymer of ethylene and the a olefin include an ethylene hexene-1 copolymer, an ethylene butene-1 copolymer, an ethylene octene-1 copolymer, and the like. From the viewpoint of bending pinhole resistance, an ethylene-hexene copolymer is preferable.

The lower limit of MFR (measurement at 190°C, 2.18 kg) of the linear low-density polyethylene is preferably 1.0 g/10 min, and more preferably 2.0 g/10 min. The upper limit is preferably 7.0 g/min and more preferably 5.0 g/10 min. Within the range above, favorable compatibility with a polypropylene-based resin can be realized, and a high sealing strength can be obtained.

The lower limit of the melting point of the linear low-density polyethylene is preferably 112°C, more preferably 116°C, and further preferably 120°C. When the melting point is not lower than 112°C, slipperiness and heat resistance to retorting easily become favorable. The upper limit of the melting point of the linear low-density polyethylene is preferably 130°C and more preferably 128°C. When the melting point is not higher than 130°C, impact resistance easily becomes favorable.

The lower limit of the density of the linear low-density polyethylene is preferably 916 kg/m$^3$ and more preferably 921 kg/m$^3$. When the density is not smaller than 916 kg/m$^3$, slipperiness can be easily obtained. The upper limit is 935 kg/m$^3$ and more preferably 930 kg/m$^3$. When the density is not larger than 935 kg/m$^3$, favorable bag-breaking resistance can be easily obtained.

Specific examples of the linear low-density polyethylene commercially available include an ethylene-hexene copolymer (plant-derived linear low-density polyethylene) SLH218 (MFR: 2.3 g/min, density: 916 kg/m$^3$, melting point: 126°C) manufactured by Braskem, and an ethylene-hexene copolymer (fossil-fuel-derived linear low-density polyethylene) FV405 (MFR: 4.0 g/min, density: 923 kg/m$^3$, melting point: 118°C) manufactured by Sumitomo Chemical Co., Ltd.

The linear low-density polyethylene may contain ethylene derived from a plant such as sugarcane, and a plant-derived linear low-density polyethylene obtained through polymerization of an a olefin such as ethylene derived from a plant or a fossil fuel such as petroleum.

The plant-derived linear low-density polyethylene has physical properties substantially the same as those of a fossil-fuel-derived linear low-density polyethylene. From the viewpoint of carbon-neutrality, the plant-derived linear low-density polyethylene has an effect of reducing carbon dioxide that is generated, and can suppress global warming. The lower limit of the content of the plant-derived ethylene of the plant-derived linear low-density polyethylene is preferably 50% and more preferably 80%. When the content is not lower than 50%, the carbon dioxide reduction effect is favorable. The upper limit is preferably 98% and more preferably 96%. When the content exceeds 98%, the ratio of the a olefin to be copolymerized decreases, and the bag-breaking resistance decreases.

(Copolymer elastomer)

In the present invention, in order to further increase the bag-breaking resistance and slipperiness at the time of falling of the packaging bag of the present invention, a copolymer elastomer is used as a component of the polyolefin-based resin film of the present invention.

Examples of the copolymer elastomer include an olefin-based thermoplastic elastomer and the like. The olefin-based thermoplastic elastomer includes an olefin-based thermoplastic copolymer that exhibits rubber-like elasticity at a temperature near ordinary temperature, and an olefin-based thermoplastic copolymer elastomer that exhibits relatively high Shore hardness and good transparency.

As such a copolymer elastomer, an elastomer of at least one type selected from the group consisting of an ethylene-propylene copolymer elastomer, a propylene-butene copolymer elastomer, and an ethylene-butene copolymer elastomer may be used. From the viewpoint of impact resistance and heat-sealing strength, an ethylene-propylene copolymer elastomer is preferable. The ethylene-propylene copolymer elastomer denotes, among thermoplastic elastomers, an elastomer that is amorphous or has low crystallinity and that is obtained by copolymerizing ethylene and propylene.

The copolymer elastomer used in the present invention has a melt flow rate (MFR) at 230°C and a load of 2.16 kg of 0.2 to 5.0 g/10 min, a density of 820 to 930 kg/m$^3$, and a molecular weight distribution (Mw/Mn) determined by GPC of 1.3 to 6.0.

If the melt flow rate (MFR) of the copolymer elastomer used in the present invention at 230°C and a load of 2.16 kg is 0.2 g/10 min or more, uniformity of kneading is likely to occur or fish eye is less likely to occur. If the melt flow rate (MFR) is 5.0 g/min or less, bag-breaking resistance is likely to be improved.

The limiting viscosity [η] of the copolymer elastomer used in the present invention is preferably 1.0 to 5.0 dl/g, preferably 1.2 to 3.0 in terms of maintaining heat-sealing strength and impact strength and bag drop impact strength. If the limiting viscosity [η] is 1.0 dl/g or more, uniformity of kneading is likely to occur or fish eye is less likely to occur. If the limiting viscosity [η] is 5.0 dl/g or less, bag-breaking resistance and heat-sealing strength are likely to be improved.

The copolymerization ratio of an ethylene component in the ethylene-propylene copolymer elastomer, the propylene-butene copolymer elastomer, and the ethylene-propylene copolymer elastomer is preferably 55 to 85% by weight, more preferably 60 to 80% by weight. The copolymerization ratio of a propylene component in the ethylene-propylene copolymer elastomer is preferably 15 to 45% by weight, more preferably 20 to 40% by weight.

A specific example of the ethylene-propylene copolymer elastomer includes an ethylene-propylene copolymer elastomer (TAFMER P0480 manufactured by Mitsui Chemicals, Inc.) having a propylene content of 27% by weight, a density of 870 kg/m$^3$, and a MFR (230°C, 2.16 kg) of 1.8 g/10 min.

(Styrene-based copolymer elastomer)

In the present invention, in order to increase transparency and impact resistance, a styrene-based copolymer elastomer can be used. The styrene-based copolymer elastomer is a block copolymer whose hard segment is styrene and whose soft segment is an olefin, a diene, or the like. Examples thereof include SEBS (hydrogenated styrene-based thermoplastic elastomer) whose soft segment is hydrogenated butadiene, and SEPS whose soft segment is hydrogenated isoprene. An example of a hydrogenated styrene-based rubber is HSBR, i.e., hydrogenated styrene butadiene rubber. The copolymerization proportion of the styrene component of the styrene-based copolymer elastomer is preferably 5 to 20 % by weight.

The melt flow rate (MFR) at 230°C and a load of 2.16 kg of the styrene-based copolymer elastomer of the present invention is preferably 0.2 to 5.0 g/10 min. When the MFR is not smaller than 0.2 g/10 min, uniform kneading can be easily realized, and fish eyes are less likely to be generated. When the MFR is not larger than 5.0 g/min, bag-breaking resistance is easily improved.

A specific example of the styrene-based copolymer elastomer of the present invention is SEBS (KRATON G1645 manufactured by KRATON CORPORATION) having a styrene content of 13% by weight and an MFR (230°C, 2.16 kg) of 3.0 g/10 min.

(Polyolefin-based resin film)

The polyolefin-based resin film of the present invention may be formed as a single-layer, or a plurality of layers of two or more layers. For example, the polyolefin-based resin film may have a configuration of a heat-seal layer/laminate layer, or a three-layer configuration of heat-seal layer/intermediate layer/laminate layer. Further, each layer may be composed of a plurality of layers. The heat-seal layer is the layer positioned on the outermost surface side of the polyolefin-based resin film. Heat-seal layers are subjected to thermocompression bonding while being opposed to each other, whereby a packaging body can be manufactured.

The layer positioned on the outermost surface side on the opposite side of the heat-seal layer is the laminate layer, and the laminate layer can be laminated with, by being attached to, a base film such as a polyester film or a polyamide film.

In the case of a three-layer configuration of heat-seal layer/intermediate layer/laminate layer, if the end portion of a film product of the present invention or the film product itself is recovered to be made into pellets again, and the resultant pellets are used as the raw material of the intermediate layer, it is possible to reduce the cost of the film product without impairing characteristics such as straight cuttability, ease of tearing, bag-making processability, and bag-breaking resistance.

A polyolefin-based resin and an additive that form the polypropylene-based resin composition when the polyolefin-based resin film of the present invention is a single layer will be described.

(Propylene-ethylene block copolymer)

With respect to the polyolefin-based resin film of the present invention, in a total of 100 parts by weight of the polyolefin-based resin forming the polypropylene-based resin composition, the upper limit of the content of the propylene-ethylene block copolymer is preferably 80 parts by weight and more preferably 70 parts by weight. When the content is not larger than 80 parts by weight, low-temperature heat sealability becomes favorable. The lower limit of the content of the propylene-ethylene block copolymer is preferably 55 parts by weight and more preferably 60 parts by weight. When the content is not smaller than 55 parts by weight, bag-breaking resistance and straight cuttability become favorable.

(Propylene-$\alpha$ olefin random copolymer)

With respect to the polyolefin-based resin film of the present invention, in a total of 100 parts by weight of the polyolefin-based resin forming the polypropylene-based resin composition, the upper limit of the content of the propylene-$\alpha$ olefin random copolymer is preferably 30 parts by weight and more preferably 20 parts by weight. When the content is not larger than 30 parts by weight, bag-breaking resistance becomes favorable. The lower limit of the content of the propylene-$\alpha$ olefin random copolymer is preferably 10 parts by weight and more preferably 15 parts by weight. When the content is not smaller than 10 parts by weight, low-temperature heat sealability becomes favorable.

(Linear low-density polyethylene)

With respect to the polyolefin-based resin film of the present invention, in a total of 100 parts by weight of the polyolefin-based resin forming the polypropylene-based resin composition, the upper limit of the content of the linear low-density polyethylene is preferably 30 parts by weight and more preferably 20 parts by weight. When the content is not larger than 30 parts by weight, heat-sealing strength and the static friction coefficient become favorable. The lower limit of the content of the propylene-$\alpha$ olefin random copolymer is preferably 10 parts by weight and more preferably 15 parts by weight. When the content is not smaller than 10 parts by weight, bag-breaking resistance becomes favorable.

(Copolymer elastomer)

With respect to the polyolefin-based resin film of the present invention, in a total of 100 parts by weight of the polyolefin-based resin forming the polypropylene-based resin composition, the upper limit of the content of at least one type of an elastomer selected from the group consisting of an ethylene-propylene copolymer elastomer, a propylene-butene copolymer elastomer, an ethylene-butene copolymer elastomer, and a styrene-based copolymer elastomer is preferably 10 parts by weight in total and more preferably 8 parts by weight in total. When the content is not larger than 10 parts by weight, heat-sealing strength becomes favorable. The lower limit of the content of at least one type of an elastomer selected from the group consisting of an ethylene-propylene copolymer elastomer, a propylene-butene copolymer elastomer, an ethylene-butene copolymer elastomer, and a styrene-based copolymer elastomer is preferably 3 parts by weight in total and more preferably 5 parts by weight in total. When the content is not smaller than 3 parts by weight, bag-breaking resistance becomes favorable.

(Styrene-based copolymer elastomer)

With respect to the polyolefin-based resin film of the present invention, in a total of 100 parts by weight of the polyolefin-based resin forming the polypropylene-based resin composition, the content of the styrene-based copolymer elastomer is preferably not larger than 10 parts by weight and more preferably not larger than 8 parts by weight in total. When the content is not larger than 10 parts by weight, heat-sealing strength becomes further preferable.

(Additive)

In the polyolefin-based resin film of the present invention, the polypropylene-based resin composition may contain an anti-blocking agent. The anti-blocking agent to be blended is not limited in particular. Examples thereof include: inorganic particles such as calcium carbonate, silicon dioxide, titanium dioxide, barium sulfate, magnesium oxide, talc, and zeolite; and organic particles composed of an acrylic-based, styrene-based, or styrene butadiene-based polymer, further, a cross-linked product thereof, or the like. When ease of control of particle diameter distribution, dispersibility, ease of maintaining the optical appearance, further, prevention of falling off of particles from the film, and the like are taken into consideration, organic particles composed of a cross-linked product are preferable. As the cross-linked product, a crosslinked acrylic-based polymer composed of an acrylic-based monomer such as acrylic acid, methacrylic acid, an acrylic ester, or a methacrylic ester is particularly preferable, and more preferably, a crosslinked polymethyl methacrylate is recommended. On the surface of these particles, various coatings may be provided for the purpose of dispersibility and falling off prevention.

The shape of these particles may be an irregular shape, a spherical shape, an elliptical spherical shape, a rod shape, an angular shape, a polyhedron, a conical shape, and further, a porous shape having a cavity in the surface or inside of the particle. Preferably, the anti-blocking agent has an average particle diameter of 3 to 12 μm from the viewpoint of film appearance and blocking resistance.

Use of one type of the anti-blocking agent is effective. However, when two or more types of inorganic particles having different particle diameters or shapes are blended, more complicated projections can be formed on the film surface, and thus, a higher blocking prevention effect can be obtained in some cases.

When the block copolymer is used as a main constituent resin, projections and recesses may be formed on the surface due to dispersion of the polymer, and thus, without addition of an anti-blocking agent, high blocking resistance effect may be obtained.

In a polypropylene-based resin film of the present invention, the polypropylene-based resin composition may have an organic lubricant added thereto. Slippage and the blocking prevention effect of the laminated film are improved, and handleability of the film is improved. The reason for this is considered that the organic lubricant bleeds out to be present on the film surface, so that a lubricating effect and a release effect are exhibited. Further, as the organic lubricant, one that has a melting point of not lower than normal temperature is preferably added. Examples of a suitable organic lubricant include a fatty acid amide and a fatty acid ester. More specific examples include oleic acid amide, erucic acid amide, behenic acid amide, ethylene bis oleamide, hexamethylene bis oleamide, ethylene bis oleamide, or the like. These may be used alone, but use of two or more types in combination can maintain slippage and the blocking prevention effect also under a severer environment in some cases, and thus is preferable.

In the polypropylene-based resin film of the present invention, the polypropylene-based resin composition may have blended therein appropriate amounts of an antioxidant, an antistatic agent, an anti-fogging agent, a neutralizer, a nucleating agent, a colorant, another additive, an inorganic filler, and the like as necessary, within a range where the objective of the present invention is not impaired. As the antioxidant, a phenol-based antioxidant or a phosphite-based antioxidant may be used alone or in combination, or an antioxidant having a phenol-based backbone and a phosphite-based backbone in one molecule may be used alone.

Description will be given regarding the polyolefin-based resin and the additive that form the polypropylene-based resin composition for a heat-seal layer, when the polyolefin-based resin film of the present invention is composed of a plurality of, i.e., two or more, layers, e.g., when the polyolefin-based resin film has a configuration of heat-seal layer/laminate layer, or a three-layer configuration of heat-seal layer/intermediate layer/laminate layer.

(Propylene-ethylene block copolymer)

With respect to the heat-seal layer of the polyolefin-based resin film of the present invention, in a total of 100 parts by weight of the polyolefin-based resin forming the polypropylene-based resin composition, the upper limit of the content of the propylene-ethylene block copolymer is preferably 80 parts by weight and more preferably 70 parts by weight. When the content is not larger than 80 parts by weight, low-temperature heat sealability becomes favorable. The lower limit of the content of the propylene-ethylene block copolymer is preferably 55 parts by weight and more preferably 60 parts by weight. When the content is not smaller than 55 parts by weight, bag-breaking resistance and straight cuttability become favorable.

(Propylene-a olefin random copolymer)

With respect to the heat-seal layer of the polyolefin-based resin film of the present invention, in a total of 100 parts by weight of the polyolefin-based resin forming the polypropylene-based resin composition, the upper limit of the content of the propylene-a olefin random copolymer is preferably 30 parts by weight and more preferably 20 parts by weight. When the content is not larger than 30 parts by weight, bag-breaking resistance becomes favorable. The lower limit of the content of the propylene-a olefin random copolymer is preferably 10 parts by weight and more preferably 15 parts by weight. When the content is not smaller than 10 parts by weight, low-temperature heat sealability becomes favorable.

(Linear low-density polyethylene)

With respect to the heat-seal layer of the polyolefin-based resin film of the present invention, in a total of 100 parts by weight of the polyolefin-based resin forming the polypropylene-based resin composition, the upper limit of the content of the linear low-density polyethylene is preferably 30 parts by weight and more preferably 20 parts by weight. When the content is not larger than 30 parts by weight, heat-sealing strength and the static friction coefficient become favorable. The lower limit of the content of the propylene-$\alpha$ olefin random copolymer is preferably 10 parts by weight and more preferably 15 parts by weight. When the content is not smaller than 10 parts by weight, bag-breaking resistance becomes favorable.

(Copolymer elastomer)

With respect to the heat-seal layer of the polyolefin-based resin film of the present invention, in a total of 100 parts by weight of the polyolefin-based resin forming the polypropylene-based resin composition, the upper limit of the content of at least one type of an elastomer selected from the group consisting of an ethylene-propylene copolymer elastomer, a propylene-butene copolymer elastomer, an ethylene-butene copolymer elastomer, and a styrene-based copolymer elastomer is not limited in particular, but is preferably 10 parts by weight in total and more preferably 8 parts by weight in total. When the content is not larger than 10 parts by weight, heat-sealing strength becomes favorable. The lower limit of the content of at least one type of an elastomer selected from the group consisting of an ethylene-propylene copolymer elastomer, a propylene-butene copolymer elastomer, an ethylene-butene copolymer elastomer, and a styrene-based copolymer elastomer is not limited in particular, but is preferably 3 parts by weight in total and more preferably 5 parts by weight in total. When the content is not smaller than 3 parts by weight, bag-breaking resistance becomes favorable.

(Styrene-based copolymer elastomer)

With respect to the heat-seal layer of the polyolefin-based resin film of the present invention, in a total of 100 parts by weight of the polyolefin-based resin forming the polypropylene-based resin composition, the content of the styrene-based copolymer elastomer is preferably not larger than 10 parts by weight and more preferably not larger than 8 parts by weight in total. When the content is not larger than 10 parts by weight, heat-sealing strength becomes further preferable.

(Additive)

With respect to the heat-seal layer of polyolefin-based resin film of the present invention, the polypropylene-based resin composition may contain an anti-blocking agent. The anti-blocking agent to be added is not particularly limited, and examples thereof include inorganic particles such as calcium carbonate, silicon dioxide, titanium dioxide, barium sulfate, magnesium oxide, talc, and zeolite and organic particles made of an acrylic, styrene-based, or styrene-butadiene-based polymer or a cross-linked product of such a polymer. In consideration of controllability of particle size distribution, dispersibility, ease of maintaining optical appearance, and prevention of dropping off of particles from the film, organic particles made of a cross-linked product are preferred. Particularly, the cross-linked product is preferably a crosslinked acrylic polymer made of an acrylic monomer such as acrylic acid, methacrylic acid, an acrylic acid ester, or a methacrylic acid ester, and cross-linked polymethyl methacrylate is more preferably recommended. The surfaces of these particles may be coated with various materials for the purpose of improving dispersibility or preventing dropping off of particles.

These particles may have an indefinite shape, a spherical shape, an oval spherical shape, a rod-like shape, a horn-like shape, a polyhedral shape, or a conical shape, and further may be porous particles having pores in surfaces and inside thereof. The anti-blocking agent preferably has an average particle diameter of 3 to 12 $\mu$m in terms of film appearance and blocking resistance.

The use of only one kind of anti-blocking agent is effective, but there is a case where a higher anti-blocking effect can be obtained by mixing two or more kinds of inorganic particles different in particle diameter or shape because more complicated projections are formed on the surface of the film.

When a block copolymer is used as a main constituent resin, there is a case where surface irregularities are formed by dispersion of the polymer, and therefore a high anti-blocking effect can be obtained without adding the anti-blocking agent.

With respect to the heat-seal layer of polyolefin-based resin film of the present invention, the polypropylene-based resin composition may contain an organic lubricant. This makes it possible to improve the lubricity of a laminated film or the effect of preventing blocking, thereby improving handleability of the film. The reason for this is considered to be that the organic lubricant is present on the surface of the film due to bleeding out, and therefore a lubricating effect or a releasing effect is developed. Further, the organic lubricant to be added preferably has a melting point equal to or more than ordinary temperature. Preferred examples of the organic lubricant include fatty acid amides and fatty acid esters. More specific examples thereof include oleic amide, erucic amide, behenic amide, ethylene bisoleic amide, hexamethylene bisoleic amide, and ethylene bisoleic amide. These organic lubricants may be used singly, but are preferably used in combination of two or more of them because there is a case where lubricity and the effect of preventing blocking can be maintained even in more severe environments.

With respect to the heat-seal layer of polyolefin-based resin film of the present invention, if necessary, the polypropylene-based resin composition may contain appropriate amounts of an antioxidant, an antistatic agent, an anti-fogging agent, a neutralizer, a nucleating agent, a colorant, other additives, an inorganic filler etc. without interfering with the achievement of the object of the present invention. As the antioxidant, a phenol-based antioxidant and a phosphite-based antioxidant may be used singly or in combination, or an antioxidant having the skeleton of a phenol-based antioxidant and the skeleton of a phosphite-based antioxidant in one molecule may be used singly.

In a polyolefin-based resin composition in the laminate layer or in the intermediate layer and the laminate layer of the polyolefin-based resin film of the present invention, the mixing ratio between the propylene-ethylene block copolymer, the propylene-a olefin random copolymer, the linear low-density polyethylene, the ethylene-propylene copolymer elastomer, the propylene-butene copolymer elastomer, the ethylene-butene copolymer elastomer, and the styrene-based copolymer elastomer may be the same as that of the heat-seal layer. However, when the mixing ratios are changed in the respective layers, the balance of characteristics such as tear properties, heat-sealing strength, and bag-breaking resistance can be adjusted.

(Method for producing polyolefin-based resin film)

As a method for forming the polyolefin-based resin film of the present invention, for example, an inflation method or a T-die method may be used. However, a T-die method is preferred from the viewpoint of enhancing transparency or ease of drafting. An inflation method uses air as a cooling medium, but a T-die method uses a cooling roll, and is therefore a production method advantageous for increasing the cooling speed of an unstretched sheet. By increasing the cooling speed, crystallization of an unstretched sheet can be prevented, which is advantageous in that high transparency can be achieved and the burden of stretching in a subsequent process can easily be controlled. For these reasons, the polyolefin-based resin film of the present invention is more preferably formed by a T-die method.

The lower limit of temperature of the cooling roll at the time when a melted raw material resin is cast to obtain a non-oriented sheet is preferably 15°C, more preferably 20°C. If the temperature of the cooling roll is less than the above lower limit, there is a case where the contact between an unstretched sheet and the cooling roll is poor due to the occurrence of condensation on the cooling roll, which causes a thickness defect. The upper limit of temperature of the cooling roll is preferably 50°C, more preferably 40°C. If the temperature of the cooling roll is 50°C or lower, the transparency of the polyolefin-based resin film is less likely to deteriorate.

A method for stretching a non-oriented sheet is, for example, an inflation method, a tenter transverse stretching method, or a roll longitudinal stretching method may be used. However, a roll longitudinal stretching method is preferred in terms of orientation controllability. By stretching a non-oriented sheet under appropriate conditions, straight cuttability is developed. This is because molecular chains are regularly arranged in a stretch direction.

The lower limit of a stretch ratio is preferably 2.8 times, more preferably 3.3 times, and further preferably 3.4 times. If the stretch ratio is 2.8 times or more, tear strength in the stretching direction is easily to be small so that straight cuttability is improved. The upper limit of the stretch ratio is preferably 4.8 times. If the stretch ratio is 4.8 times or less, orientation is less likely to excessively proceed, heat-sealing strength is improved, and bag-breaking resistance is also improved. The upper limit of the stretch ratio is more preferably 4.5 times, further preferably 4.2 times, and particularly preferably 3.7 times.

The lower limit of a roll temperature during stretching is preferably 80°C. If the roll temperature is 80°C or higher, stretch stress applied to the film is less likely to increase so that heat shrinkage ratio of the film is not too high. The lower limit of the roll temperature is more preferably 90°C.

The upper limit of the stretch roll temperature is preferably 140°C. If the stretch roll temperature is 140°C or lower, stretching stress applied to the film is not too low, the heat shrinkage ratio in the longitudinal direction of the film is not too low, and the film is less likely to be fused to the stretch roll. The upper limit of the stretch roll temperature is more preferably 130°C, even more preferably 125°C, particularly preferably 115°C.

It is preferred that before the unstretched sheet is subjected to a stretching process, the temperature of the sheet is increased by contact with a pre-heating roll.

The lower limit of temperature of the pre-heating roll at the time when the non-oriented sheet is stretched is preferably 80°C, more preferably 90°C. If the temperature of the pre-heating roll is 80°C or higher, stretch stress is not too high and thickness variation is less likely to large. The upper limit of temperature of the pre-heating roll is preferably 140°C, more preferably 130°C, even more preferably 125°C. If the temperature of the pre-heating roll is 140°C or lower, the film does not easily stick to the roll so that thickness variation is less likely to large.

The polyolefin-based resin film subjected to the stretching process is preferably subjected to annealing treatment to prevent heat shrinkage ratio. Examples of a method for annealing treatment include a roll heating method and a tenter method, but a roll heating method is preferred in terms of simplicity of equipment or ease of maintenance. Since annealing treatment reduces the internal stress of the film, thereby suppressing heat shrinkage ratio in the longitudinal direction of the film, heat shrinkage ratio in the longitudinal direction and heat-sealing strength are not sacrificed compared to merely increase the stretch ratio in order to improve tearability like a conventional method. Annealing treatment may give adverse effect on properties other than heat shrinkage ratio in the longitudinal direction and heat-sealing strength, but in the present invention, the adverse effects on bag-breaking resistance and the like can be suppressed by using a copolymer elastomer in combination.

The lower limit of temperature of annealing treatment is preferably 100°C. If the temperature of annealing treatment is 100°C or lower, a heat shrinkage ratio in the longitudinal direction is less likely to high or tear strength is less likely to increase so that the finished quality of a packaging bag after bag making or retorting may deteriorate. The lower limit of temperature of annealing treatment is more preferably 115°C, particularly preferably 125°C.

The upper limit of temperature of annealing treatment is preferably 140°C. When the temperature of annealing treatment is higher, a heat shrinkage ratio of the longitudinal direction is more likely to reduce. However, if the temperature of annealing treatment exceeds the above upper limit, there is a case where the thickness of the film varies or the film is fused to production equipment. The upper limit of temperature of annealing treatment is more preferably 135°C.

In an annealing step, a relaxation step can be provided by sequentially reducing the conveyance speed of the film, such as, for example, reducing the rotation speed of the roll after heating. When the relaxation step is provided, the heat shrinkage ratio of the manufactured polyolefin-based resin film can be reduced.

The upper limit of the relaxation rate in the relaxation step is preferably 10% and more preferably 8%. When the relaxation rate is 10% or less, the heat shrinkage ratio can be prevented from becoming too low. The lower limit of the relaxation rate is preferably 1% and more preferably 3%. When the relaxation rate is 1% or more, the heat shrinkage ratio in the longitudinal direction of the polyolefin-based resin film is less likely to be increased.

In the present invention, the lamination surface of the polyolefin-based resin film described above is preferably subjected to surface activation by corona treatment or the like. This improves the strength of lamination between the polyolefin-based resin film and a base film. The lamination surface is provided on the opposite side of the heat-seal surface.

(Properties of polyolefin-based resin film)

(Film thickness)

The lower limit of the thickness of the polyolefin-based resin film according to the present invention is preferably 10 μm, more preferably 30 μm. If the thickness is less than the above lower limit, the polyolefin-based resin film is relatively thinner than a base film, and therefore there is a case where straight cuttability of a laminated body deteriorates, the film is difficult to process due to too low resilience, or bag-breaking resistance deteriorates due to a reduction in impact resistance. The upper limit of thickness of the film is preferably 200 μm, more preferably 130 μm. If the thickness of the film exceeds the above upper limit, there is a case where the film is difficult to process due to too high resilience or an appropriate packaging body is difficult to produce.

(Haze)

The upper limit of haze of the polyolefin-based resin film of the present invention is preferably 45%, more preferably 35%, and further preferably 30%. When the haze is not larger than 45%, the visibility of contents easily becomes favorable when the polyolefin-based resin film is laminated with a transparent base material. The lower limit of haze is preferably 10% and more preferably 15%. When the haze is not lower than 10%, blocking resistance easily becomes favorable.

(Static friction coefficient)

The upper limit of the static friction coefficient of the polyolefin-based resin film of the present invention is preferably 1.5, more preferably 1.2, further preferably 1.1, and particularly preferably 1.0. When the static friction coefficient is not larger than 1.5, inner surfaces easily slip with each other when the packaging body is filled with food or opened, whereby favorable openability is realized. The lower limit of the static friction coefficient is preferably 0.2, more preferably 0.3, and further preferably 0.5. When the static friction coefficient is not smaller than 0.2, collapse of winding is less likely to occur when the film in a roll shape is transported.

(Heat shrinkage ratio)

The upper limit of heat shrinkage ratio of the polyolefin-based resin film according to the present invention in the longitudinal direction at 120°C for 30 minutes is 9.0%. If the heat shrinkage ratio in the longitudinal direction is 9.0% or less, tear strength is smaller, and the appearance of a packaging body is excellent due to small shrinkage during heat sealing or during retorting of the packaging body. The upper limit of the heat shrinkage ratio in the longitudinal direction is preferably 6.0%, more preferably 5.0%, even more preferably 4.5%, and particularly preferably 4.0%. The lower limit of heat shrinkage ratio of the polyolefin-based resin film according to the present invention in the longitudinal direction is 1.0%. If the heat shrinkage ratio in the longitudinal direction is 1.0% or more, tear strength is easily to be small. The lower limit of heat shrinkage ratio in the longitudinal direction is preferably 2.0%.

The upper limit of the heat shrinkage ratio in the direction (width direction) at a right angle with respect to the longitudinal direction of the polyolefin-based resin film of the present invention is preferably 3.0%. When the heat shrinkage ratio is 3.0% or less, tear strength in the longitudinal direction is easily reduced, and straight cuttability is easily obtained. The upper limit of the heat shrinkage ratio is more preferably 2.5%, even more preferably 2.0%, and particularly preferably 1.5%. The lower limit of the heat shrinkage ratio in the width direction of the polyolefin-based resin film of the present invention is -2.0%. When the heat shrinkage ratio is -2.0% or less, elongation occurs during heat-sealing, and appearance of the packaging body may be impaired. The lower limit of the heat shrinkage ratio is preferably - 1.0%, more preferably -0.5%, and even further preferably 0.0%.

(Tear strength)

The upper limit of tear strength of the polyolefin-based resin film according to the present invention in the longitudinal direction is preferably 500 mN. If the tear strength in the longitudinal direction exceeds the above upper limit, there is a case where a laminated film is difficult to tear. The upper limit of the tear strength in the longitudinal direction is more preferably 400 mN, further preferably 300 mN, and even further preferably 250 mN.

The lower limit of tear strength of the polyolefin-based resin film according to the present invention in the longitudinal direction is preferably 100 mN. If the tear strength in the longitudinal direction is less than the above lower limit, there is a case where bag-breaking resistance deteriorates. The lower limit of the tear strength in the longitudinal direction is more preferably 150 mN.

(Piercing strength)

The lower limit of piercing strength of the polyolefin-based resin film according to the present invention is preferably 5.0 N, more preferably 6.0 N, even further preferably 7.0 N, and particularly preferably 7.5 N. If the piercing strength is less than the above lower limit, a pin hole may be formed when a projection hits a packaging body. The upper limit of the piercing strength is not particularly limited, but is preferably 12.0 N, more preferably 10.0 N. If the piercing strength exceeds the above upper limit, handling of the film or a laminated body using the film may be difficult due to too high resilience.

The lower limit of piercing strength per 1 $\mu$m of the polyolefin-based resin film according to the present invention is preferably 0.08 N/$\mu$m, more preferably 0.10 N/$\mu$m. If the piercing strength is less than the above lower limit, there is a case where a pin hole is formed when a projection hits a packaging body. The upper limit of the piercing strength is preferably 0.40 N/$\mu$m, more preferably 0.30 N/$\mu$m, and further preferably 0.25 N/$\mu$m. If the piercing strength exceeds the above upper limit, there is a case where handling of the film or a laminated body using the film is difficult due to too high resilience.

(Orientation coefficient in longitudinal direction)

An orientation coefficient $\Delta$Nx in the longitudinal direction used in the present invention can be calculated by formula 1.

$$\Delta Nx = Nx - (Ny + Nz)/2 \ (\text{formula } 1)$$

Nx: refractive index in longitudinal direction
Ny: refractive index in direction perpendicular to longitudinal direction and thickness direction
Nz: refractive index in thickness direction

The lower limit of the orientation coefficient $\Delta$Nx in the longitudinal direction of the polyolefin-based resin film of the present invention is 0.0120, more preferably 0.0150, further preferably 0.170, and particularly preferably 0.180. When the orientation coefficient $\Delta$Nx is 0.0120 or more, straight cuttability of the packaging body is easily obtained. The upper limit of the orientation coefficient $\Delta$Nx in the longitudinal direction is preferably 0.0250, more preferably 0.0220, and further preferably 0.0200. When the orientation coefficient $\Delta$Nx is 0.0250 or less, the heat-sealing strength is less likely to be reduced.

(Plane orientation coefficient)

A plane orientation coefficient $\Delta$P used in the present invention can be calculated by formula 2.

$$\Delta P = (Nx + Ny)/2 - Nz \ (\text{formula } 2)$$

Nx: refractive index in longitudinal direction
Ny: refractive index in direction perpendicular to longitudinal direction and thickness direction
Nz: refractive index in thickness direction

The lower limit of the plane orientation coefficient $\Delta$P of the polyolefin-based resin film of the present invention is 0.0050, more preferably 0.0080, further preferably 0.0090, even further preferably 0.0095, and further preferably 0.0100. When the plane orientation coefficient $\Delta$P is 0.0050 or more, piercing strength becomes favorable. The upper limit of the plane orientation coefficient $\Delta$P is preferably 0.0120, more preferably 0.0110. When the plane orientation coefficient $\Delta$P is 0.0120 or less, the heat-sealing strength is less likely to be reduced.

(Wetting tension)

The lower limit of wetting tension of the surface of the polyolefin-based resin film according to the present invention to be laminated on at least one film selected from the group consisting of a polyamide resin film, a polyester resin film, and a polypropylene resin film is preferably 30 mN/m, more preferably 35 mN/m. If the wetting tension is less than the above lower limit, there is a case where lamination strength reduces. The upper limit of the wetting tension is preferably 55 mN/m, more preferably 50 mN/m. If the wetting tension exceeds the above upper limit, there is a case where blocking occurs in the roll of the polyolefin-based resin film.

(Structure and production method of laminated body)

A laminated body using the polyolefin-based resin film according to the present invention is obtained by laminating the polyolefin-based resin film used as a sealant on at least one base film selected from the group consisting of a polyamide-based resin film, a polyester-based resin film, and a polypropylene-based resin film. Further, by a known technique, for the purpose of imparting adhesiveness or barrier properties, the base film may be subjected to coating or vapor deposition, or aluminum foil may further be laminated on the base film. More specifically, the laminated film may have a structure such as biaxially-stretched PET film/aluminum foil/sealant, biaxially-stretched PET film/biaxially-stretched nylon film/sealant, biaxially-stretched nylon film/sealant, biaxially-stretched polypropylene film/sealant, or biaxially-stretched PET film/aluminum foil/biaxially-stretched nylon film/sealant.

Among them, when a biaxially-stretched nylon film is laminated on a sealant having small orientation in the longitudinal direction, the straight cuttability of a resulting laminated body is significantly poor. When the polyolefin-based resin film of the present invention is used as a sealant, a laminated body having excellent straight cuttability can be produced whichever of the structures is selected.

A lamination method to be used may be a conventional method such as a dry lamination method or an extrusion lamination method, and a laminated body having excellent straight cuttability can be produced whichever of the lamination methods is used.

(Characteristics of laminated body)

(Retort shrinkage ratio)

The upper limit of the retort shrinkage ratio in the longitudinal direction of a laminated body composed of the polyolefin-based resin film of the present invention and a nylon film is preferably 5%. When the retort shrinkage ratio in the longitudinal direction exceeds the above upper limit, the appearance of the packaging body after retorting may deteriorate. The upper limit is preferably 4% and more preferably 3.5%. The lower limit of the retort shrinkage ratio in the longitudinal direction is -2%. When the retort shrinkage ratio in the longitudinal direction is smaller than the above lower limit, a large post-retorting elongation may be caused, whereby bag breakage may be caused. The lower limit is more preferably 0%. The upper limit of the retort shrinkage ratio in the width direction of a laminated body, with a nylon film, of the present invention is preferably 5%. When the retort shrinkage ratio in the width direction exceeds the above upper limit, the appearance of the packaging body after retorting may deteriorate. The upper limit is more preferably 4%. The lower limit of the retort shrinkage ratio in the width direction is -2%. When the retort shrinkage ratio in the width direction is smaller than the above lower limit, a large post-retorting elongation may be caused, whereby bag breakage may be caused. The lower limit is preferably 0% and more preferably 1%.

(Piercing strength)

The upper limit of the piercing strength of a laminated body composed of the polyolefin-based resin film of the present invention; and a PET film and an aluminum foil is preferably 25 N, more preferably 20 N, and further preferably 18 N. When the piercing strength is not larger than 25 N, handling such as filling easily becomes favorable. The lower limit of the piercing strength is preferably 10 N, more preferably 13 N, and further preferably 14 N. When the piercing strength is not smaller than 10 N, pinhole resistance easily becomes favorable.

(Tear strength)

The upper limit of the tear strength in the longitudinal direction of a laminated body composed of the polyolefin-based resin film of the present invention; and a PET film and an aluminum foil is preferably 800 mN. When the tear strength exceeds the above upper limit, the laminated body may be difficult to be torn. The upper limit is more preferably 600 mN and further preferably 500 mN.

(Heat-sealing strength)

The lower limit of the heat-sealing strength after retorting treatment at 121°C for 30 minutes of a laminated body composed of the polyolefin-based resin film of the present invention; and a PET film and an aluminum foil is preferably 35 N/15 m and more preferably 40 N/15 mm. When the heat-sealing strength is not smaller than 35 N/15 mm, leakage of content is less likely to occur. The upper limit of the heat-sealing strength is preferably 60 N/15 mm. When the upper limit above is to be exceeded, the thickness of the film needs to be increased, for example, and thus, cost may be increased.

(Heat-sealing start temperature)

The upper limit of the heat-sealing start temperature before retorting the laminated body of the present invention is preferably 195°C, more preferably 190°C, and further preferably 180°C. When the temperature exceeds 190°C, since higher temperatures are required for bag making, shrinkage of the film during bag-making becomes large, whereby the appearance is impaired. The lower limit of the heat-seal temperature is preferably 150°C, and further preferably 160°C. When the heat-seal temperature is lower than the above lower limit, film inner surfaces may be fused by heat of retorting treatment.

(Packaging body)

The laminated body provided to enclose a food product or the like as a content to protect the content from dirt or gas derived from nature is referred to as a packaging body. The packaging body is produced by, for example, cutting the laminated body and bonding inner surfaces of the laminated body to each other by a hot heat-seal bar or ultrasonic waves to form a bag. For example, a four-edge sealed bag is widely used which is produced by stacking rectangular two sheets of the laminated body in such a manner that their sealant-side surfaces face to each other and heat-sealing four edges. The content may be a food product, but may also be another product such as a daily product. The packaging body may be one having a shape other than a rectangular shape, such as a standing pouch or a pillow packaging body. Further, a packaging body capable of withstanding heat of thermal sterilization using hot water at 100°C or higher obtained by pressurization for boiling point elevation is referred to as a packaging body for retort applications. A film intended to provide such a packaging body is referred to as a film for retort applications.

("Nakiwakare")

The upper limit of "Nakiwakare" of a laminated body, with a nylon film, of the present invention and is not limited in particular, but is preferably 15 mm, more preferably 10 mm, and further preferably 6 mm. If the "Nakiwakare" exceeds this, the contents may spill when the packaging body is tear-opened.

(Bag-breaking resistance at the time of falling)

The lower limit of bag-breaking resistance at the time of falling of a packaging body composed of a laminated body using the present invention is preferably not smaller than 10 times, more preferably not smaller than 12 times, and further preferably not smaller than 14 times. When the bag-breaking resistance at the time of falling is not smaller than this, even if a packaging body having food therein is accidentally dropped, bag breakage is less likely to occur. It is sufficient that the bag-breaking resistance at the time of falling is not smaller than 20 times. When a linear low-density polyethylene is added in a specific range to a propylene-a olefin resin film, the bag-breaking resistance at the time of falling is improved. However, when the addition amount is too large and the heat-sealing strength is decreased to a large extent, the bag-breaking resistance at the time of falling deteriorates.

EXAMPLES

Hereinbelow, the present invention will be described in detail with reference to examples, but is not limited to these examples. The properties of products obtained in the examples were measured and evaluated by the following methods. In the evaluations, a longitudinal direction and a direction perpendicular to the longitudinal direction (a width direction) in film production were defined as a MD direction and a TD direction, respectively.

(1) Resin density

A density was evaluated in accordance with Method D of JIS K7112:1999 (density-gradient tube). The measurement was performed at N = 3, and an average value was calculated.

(2) Melt flow rate (MFR)

A melt flow rate was measured at 230°C (190°C for linear low-density polyethylene only) and a load of 2.16 kg on the basis of JIS K-7210-1. The measurement was performed at N = 3, and an average value was calculated.

(3) Haze

The haze of a film before being laminated was measured based on JIS K7136. The measurement was performed with N=3 with respect to a polyolefin-based resin film before being laminated, and the average value was calculated.

(4) Static friction coefficient

The seal layer sides of films before being laminated were overlapped with each other, to be subjected to measurement according to JIS K7125, using a universal tensile tester STM-T-50BP (manufactured by Baldwin Corporation). A sample was cut out so as to have a size of 200 mm in the longitudinal direction and 80 mm in the width direction and the measurement was performed.

(5) Heat shrinkage ratio

A film before lamination was cut to obtain a 120-mm square sample. Gauge lines were drawn at an interval of 100 mm in each of the MD direction and the TD direction. The sample was hung in an oven maintained at 120°C for 30 minutes to be subjected to heat treatment. A distance between the gauge lines was measured, and a heat shrinkage ratio was calculated by the following formula 3. The measurement was performed at N = 3, and an average value was calculated.

$$\text{Heat shrinkage ratio} = (\text{gauge length before heat treatment - gauge length after heat treatment})/\text{gauge length before heat treatment} \times 100\ (\%) \quad \text{(formula 3)}$$

(6) Tear strength

The tear strength was measured according to JIS K7128-1:1998. Evaluation was performed on each of a film before being laminated, and a laminated body composed of a polyolefin-based resin film; and a PET film and an aluminum foil. Measurement was performed in each of the MD direction and the TD direction with N=3, and an average value was calculated.

(7) Piercing strength

The piercing strengths of a film before being laminated, and a laminated body composed of a polyolefin-based resin film; and a PET film and an aluminum foil were measured at 23°C according to "2. Testing methods for strength, etc." in "Standards for food, additives, etc., Chapter III: Apparatus and Containers and Packaging" (Notification No. 20 of the Ministry of Health and Welfare, 1982) of the Food Sanitation Act. The film was pierced with a needle having a tip diameter of 0.7 mm at a piercing speed of 50 mm/minute, and the strength at which the needle penetrated the film was measured. Measurement was performed with N=3, and an average value was calculated.
The obtained measurement value was divided by the thickness of the film, and a piercing strength [N/$\mu$m] per 1 $\mu$m of the film was calculated.

(8) Orientation coefficient in longitudinal direction and plane orientation coefficient

The refractive index was evaluated according to Test methods for refractive index of chemical products of JIS K 0062:1999.
Measurement was performed with N=3, and an average value was calculated. The orientation coefficient $\Delta Nx$ in the longitudinal direction and plane orientation coefficient $\Delta P$ were calculated by formula 1 and formula 2.

$$\Delta Nx = Nx - (Ny + Nz)/2 \quad \text{(formula 1)}$$

$$\Delta P = (Nx + Ny)/2 - Nz \quad \text{(formula 2)}$$

Nx: refractive index in the longitudinal direction
Ny: refractive index in direction perpendicular to the longitudinal direction and thickness direction

Nz: refractive index in thickness direction

(9) Retort shrinkage ratio

A portion having four sides each measuring 120 mm was cut out from a laminated body composed of a polyolefin-based resin film and a nylon film. Reference lines were drawn at an interval of 100 mm in each of the MD direction and the TD direction. Retorting treatment with hot water was performed at 121°C for 30 minutes. The distance between the reference lines was measured, and the retort shrinkage ratio was measured according to the following formula 4. Each measurement was performed with N=3, and an average value was calculated.

$$\text{Retort shrinkage ratio} = (\text{pre-treatment reference line length} - \text{post-treatment reference line length})/\text{pre-treatment reference line length} \times 100 \, (\%) \, (\text{formula 4})$$

(10) "Nakiwakare"

Two sheets of a laminated body composed of a polyolefin-based resin film and a nylon film were heat-sealed in such a manner that their heat-seal film-side surfaces faced to each other to form a four-edge sealed bag whose inside dimension in the MD direction was 120 mm and inside dimension in the TD direction was 170 mm. A notch was made at the edge of the four-edge sealed bad, and the bag was torn with fingers in the MD direction. The bag was cut to the opposite edge, and a gap between the tear lines of the front-side film and the back-side film of the bag was measured. The measurement was performed at N = 3 in each of directions in which the right-hand side was the near side and in which the left-hand side was the near side, and an average value was calculated. The larger one of the measured values was used.

(11) Heat-sealing strength

Conditions for heat-sealing and conditions for strength measurement are as follows. Two sheets of a laminated body composed of a polyolefin-based resin film; and a PET film and an aluminum foil, obtained in Example or Comparative Example were stacked so that their polyolefin-based resin film-side surfaces faced to each other, heat-sealed at a pressure of 0.2 MPa and a heat-seal temperature of 220°C for 1 second using a seal bar having a width of 10 mm, and allowed to stand to cool. Next, retort treatment was performed using hot water at 121°C for 30 minutes. Test pieces having a size in the MD direction of 80 mm and a size in the TD direction of 15 mm were cut out from each of the films heat-sealed at different temperatures, and the heat-sealed portion of each of the test pieces was subjected to peeling at a cross head speed of 200 mm/min to measure peel strength. As a test machine, a universal testing machine 5965 manufactured by Instron was used. The measurement was performed at N = 3 at each heat-seal temperature, and an average value was calculated.

(12) Heat-sealing start temperature

With respect to a laminated body composed of a polyolefin-based resin film; and a PET film and an aluminum foil, the heat-sealing start temperature was measured according to JIS Z 1713 (2009). At this time, the film was cut into test pieces (to be heat-sealed) each having a rectangular shape measuring 50 mm in the width direction of the film×250 mm in the length direction of the film. Seal layer portions of two test pieces were overlapped with each other, and a thermal gradient tester (heat sealing tester) manufactured by Toyo Seiki Seisaku-sho, Ltd., was used, with the heat sealing pressure set to 0.2 Mpa and the heat sealing time set to 1.0 sec. Then, heat sealing was performed under a condition in which the temperature was increased at a gradient of 5°C. After the heat sealing, a portion of the test pieces was cut out so as to have a width of 15 mm. The test pieces having been fused through the heat sealing were opened at 180°, and an unsealed portion was sandwiched by a chuck, and a sealed portion was peeled. Then, a heat-seal temperature at a temperature immediately before the heat-sealing strength exceeded 30 N, and a heat-seal temperature at a temperature immediately after the heat-sealing strength exceeded 30 N were weight-averaged to calculate a heat-sealing start temperature. As a test machine, a universal testing machine 5965 manufactured by Instron was used. The test speed was set to 200 mm/min. Measurement was performed with N=5, and an average value was calculated.

(13) Bag-breaking resistance at the time of falling

Portions of a laminated body composed of a polyolefin-based resin film; and a PET film and an aluminum foil were cut out, and a four-side sealed bag having internal dimensions of a height of 170 mm and a width of 120 mm and having 300 ml of a saturated salt solution sealed therein was made. The heat sealing condition at this time was set as: 1 second at a pressure of 0.2 MPa; a seal bar having a width of 10 mm; and a heat-seal temperature set to 220°C. After the bag making process, end portions of the four-side sealed bag were cut off, and the seal width was set to 5 mm. The four-side sealed bag was retorted at 121°C for 30 minutes. Next, the four-side sealed bag was left for 8 hours in an environment of -5°C, and then, under the environment, the four-side sealed bag was caused to fall from a height of 1.2 m to a flat concrete floor. Until the bag was broken, the falling was repeated, the number of times of the repetition of the falling was measured, and the ranks were provided as below. The number of bags was set to 20 for each level, and an average value of the number of times until the bag was broken was calculated.

(14) Orientation angle

The orientation angle (°) of a base film was measured using a molecular orientation analyzer, MOA-6004 manufactured by Oji Scientific Instruments Co., Ltd. A sample whose size in the MD direction was 120 mm and size in the TD direction was 100 mm was cut out and set in the measuring instrument, and a measured value of angle was defined as an orientation angle. It is to be noted that the MD direction is 0°. The measurement was performed at N = 3, and an average value was calculated.

(15) Melting point

The temperature of the maximum melting peak of a DSC curve, of a polyolefin-based resin film, obtained by using Shimadzu differential scanning calorimeter DSC-60 manufactured by Shimadzu Corporation was regarded as the melting point. The start temperature was set to 30°C, the temperature increase rate was set to 5°C/min, and the end temperature was set to 180°C. Measurement was performed with N=3, and an average value was calculated.

(Polyolefin-based resin film)

(Raw material used)

With respect to polypropylene-based resin films of Example 1 to 8 and Comparative Example 1 to 7, raw materials were adjusted, according to resin compositions and proportions thereof shown in Table 1 and Table 2 described later. These raw materials were mixed so as to be uniform, whereby a mixed raw material for manufacturing a polyolefin-based resin film was obtained.

1) Raw material A: Propylene-ethylene block copolymer WFS5293-22 manufactured by Sumitomo Chemical Co., Ltd. (ethylene content: 7% by weight, resin density: 891 kg/m$^3$, MFR at 230°C and 2.16 kg: 3.0 g/10 min, melting point: 164°C)
2) Raw material B: Propylene-ethylene random copolymer S131 manufactured by Sumitomo Chemical Co., Ltd. (ethylene content: 5.5% by weight, resin density: 890 kg/m$^3$, MFR at 230°C and 2.16 kg: 1.5 g/10 min, melting point: 132°C, Ziegler-Natta catalyst)
3) Raw material C: Ethylene-hexene copolymer (fossil-fuel-derived linear low-density polyethylene) FV405 manufactured by Sumitomo Chemical Co., Ltd. (MFR: 4.0 g/min, density: 923 kg/m$^3$, melting point: 118°C)
4) Raw material D: Ethylene-hexene copolymer (plant-derived linear low-density polyethylene) SLH218 manufactured by Braskem (MFR: 2.3 g/min, density: 916 kg/m$^3$, melting point: 126°C)
5) Raw material E: Ethylene-hexene copolymer (fossil-fuel-derived linear low-density polyethylene) FV402 manufactured by Sumitomo Chemical Co., Ltd. (MFR: 4.0 g/min, density: 915 kg/m$^3$, melting point: 106°C)
6) Raw material F: Ethylene-propylene copolymer elastomer TAFMER P0480 manufactured by Mitsui Chemicals, Inc. (propylene content: 27% by weight, resin density: 870 kg/m$^3$, MFR at 230°C and 2.16 kg: 1.8 g/10 min, melting point: 48°C)
7) Raw material G: Styrene-based copolymer elastomer KRATON G1645 manufactured by KRATON POLYMERS (MFR: 3.0 g/10 min, styrene content: 13% by weight)

(Example 1)

(Melt extrusion)

The mixed raw material to be used in the raw materials shown in Table 1 was introduced by using a 3-stage-type single-screw extruder having a screw diameter of 90 mm to a T slot-type die designed such that: a preland was formed with two stages so as to have a width of 800 mm; and the shape of the step portion was curved so as to cause the flow of the melted resin to be uniform, thereby causing the flow in the die to be uniform. The extrusion was performed at an outlet temperature of the die being 230°C.

(Cooling)

A melted resin sheet extruded through the die was cooled by a cooling roll at 21 °C to obtain an unstretched polyolefin-based resin film having a thickness of 245 $\mu$m. During the cooling using the cooling roll, air trapping between the melted resin sheet and the cooling roll was prevented by allowing air nozzles to fix both ends of the film on the cooling roll, allowing an air knife to press the melted resin sheet against the cooling roll over the entire width thereof, and at the same time operating a vacuum chamber. The air nozzles for fixing both edges of the film were provided in series in the longitudinal direction of the film. The die was surrounded with a sheet to prevent the melted resin sheet from being exposed to wind.

(Pre-heating)

The unstretched sheet was guided to heated rolls to pre-heat the sheet by contact with the rolls. The temperature of the pre-heating rolls was set to 105°C. Both surfaces of the film were pre-heated using the rolls.

(Longitudinal direction stretching)

The unstretched sheet was guided to a longitudinal stretching machine and stretched 3.5 times using a speed difference between rolls to have a thickness of 70 $\mu$m. The temperature of the stretching rolls was set to 105°C.

(Annealing treatment)

Heat treatment was performed at 130°C using annealing rolls. Both surfaces of the film were subjected to heat treatment using the rolls.

(Relaxation step)

The speed of the roll provided downstream of the annealing rolls was reduced by 5% as a relaxation rate relative to that of the annealing roll, whereby the film was allowed to be relaxed.

(Corona treatment)

One surface (lamination surface) of the film was subjected to corona treatment (power density: 20W•min/m$^2$).

(Winding)

As for the film manufacturing speed, the winding roll speed was set to 20 m/minute. The ear portion of the manufactured film was trimmed and the film was wound into a roll.

(Production of two-layer laminated body)

A polyolefin-based resin film obtained in each of Examples and Comparative Examples was dry-laminated on a base film (biaxially-stretched nylon film manufactured by TOYOBO CO., LTD., N1102, thickness: 15 $\mu$m, orientation angle: 22° with respect to the MD direction) using an ester-based adhesive obtained by mixing 33.6 parts by weight of an ester-based adhesive for dry lamination (TM569 manufactured by Toyo-Morton, Ltd.), 4.0 parts by weight of a curing agent (CAT10L manufactured by Toyo-Morton, Ltd.), and 62.4 parts by weight of ethyl acetate so that the amount of the adhesive applied was 3.0 g/m$^2$. A laminated film obtained by lamination was maintained at 40°C for 3 days to perform aging. In this way, a laminated body composed of a polyolefin-based resin film and a nylon film was obtained.

(Production of three-layer laminated body)

An aluminum foil (manufactured by UACJ Foil Corporation, product name: 1N30) having a thickness of 7 $\mu$m and a base film (biaxially stretched PET film manufactured by Toyobo Co. Ltd., E5102, thickness: 15 $\mu$m, orientation angle: 30° with respect to the MD direction) were dry laminated by using an ester-based adhesive obtained by mixing 33.6 parts by weight of an ester-based adhesive for dry lamination (TM569 manufactured by Toyo-Morton, Ltd.), 4.0 parts by weight of a curing agent (CAT10L manufactured by Toyo-Morton, Ltd.), and 62.4 parts by weight of ethyl acetate so that the amount of the adhesive applied was 3.0 g/m². Next, with a similar method, the aluminum foil side of the laminated body and the polyolefin-based resin film obtained in each of Examples and Comparative Examples were adhered to each other. A laminated film obtained by lamination was maintained at 40°C for 3 days to perform aging, whereby a laminated body composed of the polyolefin-based resin film; and the PET film and the aluminum foil was obtained.

(Examples 2 to 6 and Comparative Examples 1 to 4)

A polyolefin-based resin film of 70 μm was obtained by the same method as in Example 1 and using the raw materials shown in Tables 1 and 2. A laminated body was obtained in the same manner as in Example 1.

(Example 7)

A polyolefin-based resin film of 70 μm was obtained by the same method as in Example 1 except that the raw materials shown in Tables 1 and 2 were used, the thickness of an unstretched polyolefin-based resin film was set to 210 μm, and the longitudinal stretch ratio was set to 3.0 times. A laminated body was obtained in the same manner as in Example 1.

(Example 8)

A polyolefin-based resin film of 70 μm was obtained by the same method as in Example 1 except that the raw materials shown in Tables 1 and 2 were used, the thickness of an unstretched polyolefin-based resin film was set to 315 μm, and the longitudinal stretch ratio was set to 4.5 times. A laminated body was obtained in the same manner as in Example 1.

(Comparative Example 5)

A polyolefin-based resin film of 70 μm was obtained by using the raw materials shown in Tables 1 and 2 and setting the thickness of an unstretched polyolefin-based resin film to 70 μm. Pre-heating, stretch, annealing treatment, and relaxation step are not provided. A laminated body was obtained in the same manner as in Example 1.

(Comparative Example 6)

A polyolefin-based resin film of 70 μm was obtained by the same method as in Example 1 except that the raw materials shown in Tables 1 and 2 were used, the thickness of an unstretched polyolefin-based resin film was set to 175 μm, and the longitudinal stretch ratio was set to 2.5 times. A laminated body was obtained in the same manner as in Example 1.

(Comparative Example 7)

A polyolefin-based resin film of 70 μm was obtained by the same method as in Example 1 except that the raw materials shown in Tables 1 and 2 were used, the thickness of an unstretched polyolefin-based resin film was set to 350 μm, and the longitudinal stretch ratio was set to 5.0 times. A laminated body was obtained in the same manner as in Example 1.
In Comparative Example 1, since no linear low-density polyethylene was added, bag-breaking resistance at the time of falling was inferior.
In Comparative Example 2, since the melting point of the added linear low-density polyethylene was low, slipperiness (static friction coefficient) was inferior.
In Comparative Example 3, since the linear low-density polyethylene was excessively added, slipperiness (static friction coefficient) and heat-sealing strength were inferior.
In Comparative Example 4, since the addition amount of the linear low-density polyethylene was small, bag-breaking resistance at the time of falling was inferior.
In Comparative Example 5, since the film was an unstretched film, "Nakiwakare" was inferior.
In Comparative Example 6, since the stretch ratio was low and the orientation coefficient in the longitudinal direction was small, "Nakiwakare" was inferior.
In Comparative Example 7, since the stretch ratio was high and the orientation coefficient in the longitudinal direction of the film was large, bag-breaking resistance at the time of falling and heat-sealability were inferior.
Table 1 and Table 2 show the above results.

[Table 1]

| | | | | Example 1 | Example 2 | Example 3 | Example 4 | Example 5 | Example 6 | Example 7 | Example 8 |
|---|---|---|---|---|---|---|---|---|---|---|---|
| Raw material used | raw material A | Pr-Et block PP | parts by weight | 70 | 64 | 64 | 67 | 64 | 67 | 64 | 64 |
| | raw material B | random PP | parts by weight | 15 | 15 | 20 | 15 | 15 | 10 | 15 | 15 |
| | raw material C | LLDPE (melting point 118°C) | parts by weight | 15 | 15 | 10 | - | 15 | 20 | 15 | 15 |
| | raw material D | LLDPE (melting point 126°C) | parts by weight | - | - | - | 15 | - | - | - | - |
| | raw material E | LLDPE (melting point 106°C) | parts by weight | - | - | - | - | - | - | - | - |
| | raw material F | Et-Pr elastomer | parts by weight | - | 6 | 6 | - | 3 | - | 6 | 6 |
| | raw material G | St-based elastomer | parts by weight | - | - | - | 3 | 3 | 3 | - | - |
| Manufacturing condition | stretch ratio | | - | 3.5 | 3.5 | 3.5 | 3.5 | 3.5 | 3.5 | 3.0 | 4.5 |

EP 4 279 269 A1

| | | | Example 1 | Example 2 | Example 3 | Example 4 | Example 5 | Example 6 | Example 7 | Example 8 |
|---|---|---|---|---|---|---|---|---|---|---|
| Single body | thickness | | μm | 70 | 70 | 70 | 70 | 70 | 70 | 70 | 70 |
| | haze | | % | 26.0 | 19.8 | 21.7 | 29.9 | 18.2 | 16.9 | 18.4 | 26.9 |
| | static friction coefficient | untreated surfaces | - | 1.01 | 0.92 | 0.88 | 0.98 | 1.02 | 1.11 | 0.98 | 0.84 |
| | heat shrinkage ratio | longitudinal direction | % | 2.7 | 3.9 | 3.6 | 2.2 | 3.8 | 3.8 | 3.2 | 4.1 |
| | | width direction | % | 0.1 | 0.7 | 0.7 | 2.2 | 1.2 | 1.0 | 0.5 | 1.1 |
| | tear strength | longitudinal direction | mN | 222 | 225 | 216 | 261 | 256 | 278 | 248 | 194 |
| | | width direction | mN | 3963 | 3564 | 3423 | 4077 | 2804 | 3137 | 3345 | 3951 |
| | piercing strength | | N | 8.1 | 7.7 | 7.9 | 8.1 | 7.6 | 7.6 | 7.4 | 8.3 |
| | | | N/μm | 0.12 | 0.11 | 0.11 | 0.12 | 0.11 | 0.11 | 0.11 | 0.12 |
| | orientation coefficient In longitudinal direction | ⊿Nx | - | 0.0179 | 0.0175 | 0.0189 | 0.0179 | 0.0184 | 0.0178 | 0.0164 | 0.0197 |
| | plane orientation coefficient | ⊿P | - | 0.0104 | 0.0103 | 0.0109 | 0.0098 | 0.0105 | 0.0105 | 0.0096 | 0.0107 |
| | wetting tension | | N/m | 43 | 43 | 43 | 43 | 43 | 43 | 43 | 43 |
| Laminated body Nylon | retort shrinkage ratio | longitudinal direction | % | 2.9 | 3.5 | 3.3 | 2.6 | 3.7 | 3.5 | 3.1 | 3.8 |
| | | width direction | % | 2.1 | 2.0 | 1.8 | 1.2 | 2.9 | 3.0 | 1.8 | 2.0 |
| Packaging body Nylon | "Nakiwakare" | longitudinal direction | mm | 4.1 | 4.3 | 4.4 | 4.0 | 4.5 | 4.0 | 4.6 | 3.7 |

(continued)

| | | | Example 1 | Example 2 | Example 3 | Example 4 | Example 5 | Example 6 | Example 7 | Example 8 |
|---|---|---|---|---|---|---|---|---|---|---|
| Laminated body PET-AL | piercing strength | N | 15.9 | 15.1 | 15.2 | 15.1 | 15.1 | 150 | 14.7 | 16.3 |
| | tear strength | longitudinal direction | mN | 496 | 471 | 453 | 486 | 484 | 446 | 495 | 449 |
| | | width direction | mN | Not measurable * | Not measurable * | Not measurable * | Not measurable * | Not measurable * | Not measurable * | Not measurable * | Not measurable * |
| | heat-sealing strength | longitudinal direction | N/15mm | 45.4 | 43.5 | 44.7 | 38.4 | 43.6 | 43.7 | 46.8 | 41.4 |
| | heat-sealing start temperature | °C | 189 | 189 | 187 | 186 | 181 | 184 | 185 | 191 |
| Packaging body PET-AL | bag-breaking resistance at the time of falling | times | 13.4 | 15.6 | 15.1 | 16.7 | 16.1 | 18.4 | 17.4 | 14.1 |

*"Not measurable" denotes that the film was torn In the longitudinal direction during evaluation and no measurement value was obtained.

[Table 2]

| | | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|
| Raw material used | raw material A | Pr-Et block PP | parts by weight | 64 | 67 | 44 | 64 | 64 | 64 | 64 |
| | raw material B | random PP | parts by weight | 30 | 15 | 15 | 25 | 15 | 15 | 15 |
| | raw material C | LLDPE (melting point 118° C) | parts by weight | - | - | 35 | 5 | 15 | 15 | 15 |
| | raw material D | LLDPE (melting point 126' C) | parts by weight | - | - | - | - | - | - | - |
| | raw material E | LLDPE (melting point 106° C) | parts by weight | - | 15 | - | - | - | - | - |
| | raw material F | Et-Pr elastomer | parts by weight | 6 | - | 3 | 6 | 6 | 6 | 6 |
| | raw material G | St-based elastomer | parts by weight | - | 3 | 3 | - | - | - | - |
| Manufacturing condition | stretch ratio | | - | 3.5 | 3.5 | 3.5 | 3.5 | 1.0 | 2.5 | 5.0 |

EP 4 279 269 A1

24

(continued)

| | | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|
| Single body | thickness | | $\mu$m | 70 | 70 | 70 | 70 | 70 | 70 | 70 |
| | haze | | % | 47.6 | 26.7 | 14.4 | 35.1 | 63.7 | 41.7 | 34.1 |
| | static friction coefficient | untreated surfaces | - | 0.77 | 1.55 | 1.86 | 0.84 | 1.34 | 1.17 | 0.72 |
| | heat shrinkage ratio | longitudinal direction | % | 3.2 | 2.2 | 4.2 | 3.0 | 0.2 | 1.9 | 4.6 |
| | | width direction | % | 0.6 | 1.3 | 2.1 | 0.6 | 0.5 | 0.5 | 1.2 |
| | tear strength | longitudinal direction | mN | 243 | 288 | 324 | 221 | 3360 | 1025 | 214 |
| | | width direction | mN | 4222 | 2906 | 4481 | 3714 | 7844 | 6512 | 4599 |
| | piercing strength | | N | 8.4 | 7.7 | 7.1 | 8.1 | 2.6 | 5.8 | 8.8 |
| | | | N/$\mu$m | 0.12 | 0.11 | 0.10 | 0.12 | 0.04 | 0.08 | 0.13 |
| | orientation coefficient in longitudinal direction | $\triangle$Nx | - | 0.0202 | 0.0184 | 0.0177 | 0.0195 | 0.001 | 0.0112 | 0.0258 |
| | plane orientation coefficient | $\triangle$P | - | 0.0113 | 0.0104 | 0.0101 | 0.0111 | 0.0002 | 0.0081 | 0.0125 |
| | wetting tension | | N/m | 43 | 43 | 43 | 43 | 43 | 43 | 43 |
| Laminated body Nylon | retort shrinkage ratio | longitudinal direction | % | 3.2 | 4.0 | 4.8 | 3.3 | 3.5 | 2.3 | 5.2 |
| | | width direction | % | 1.2 | 3.2 | 3.5 | 1.9 | 5.8 | 2.1 | 2.6 |
| Packaging body Nylon | "Nakiwakare" | longitudinal direction | mm | 4.6 | 4.8 | 5.2 | 4.4 | 68.6 | 21.1 | 2.4 |

(continued)

| | | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|
| Laminated body PET-AL | piercing strength | | N | 15.5 | 150 | 14.7 | 15.3 | 9.6 | 12.1 | 188 |
| | tear strength | longitudinal direction | mN | 449 | 406 | 468 | 450 | 1541 | 855 | 387 |
| | | width direction | mN | Not measurable * | Not measurable * | Not measurable * | Not measurable * | 8457 | 6149 | Not measurable * |
| | heat-sealing strength | longitudinal direction | N/15mm | 44.1 | 44.0 | 34.1 | 44.5 | 48.6 | 46.7 | 32.4 |
| | heat-sealing start temperature | | °C | 190 | 190 | 182 | 188 | 163 | 172 | 196 |
| Packaging body PET-AL | bag-breaking resistance at the time of falling | | times | 9.3 | 17.2 | 15.2 | 9.6 | 26.8 | 17.9 | 4.3 |
| *"Not measurable" denotes that the film was torn In the longitudinal direction during evaluation and no measurement value was obtained. | | | | | | | | | | |

In Table 1 and 2 showing the evaluation results, "not measured*" means that the film was torn in the MD direction during property evaluation so that a measured value was not obtained.

INDUSTRIAL APPLICABILITY

According to the present invention, it is possible to provide a retort pouch that can be opened in a straight manner with "Nakiwakare" at a low level in the opening direction, that is less likely to be broken when the pouch has fallen even after having been subjected to retorting treatment, and that is excellent in slipperiness. Thus, the present invention can significantly contribute to industries.

**Claims**

1. A polyolefin-based resin film formed from a polypropylene-based resin composition, a polyolefin-based resin forming the polypropylene-based resin composition containing:

   in a total of 100 parts by weight of the polyolefin-based resin forming the polypropylene-based resin composition, 55 to 80 parts by weight of a propylene-ethylene block copolymer;
   not smaller than 10 parts by weight and not larger than 30 parts by weight of a propylene-a olefin random copolymer; and
   not smaller than 10 parts by weight and not larger than 30 parts by weight of a linear low-density polyethylene having a melting point of not lower than 112°C and not higher than 130°C, wherein
   the polyolefin-based resin film has an orientation coefficient $\Delta Nx$ in a longitudinal direction of not smaller than 0.0120 and not larger than 0.0250.

2. The polyolefin-based resin film according to claim 1, wherein
   the polyolefin-based resin film has a haze of not lower than 10% and not higher than 45%.

3. The polyolefin-based resin film according to claim 1 or 2, wherein
   the polyolefin-based resin film has a piercing strength of not smaller than 5 N and not larger than 15 N.

4. The polyolefin-based resin film according to any one of claims 1 to 3, wherein
   the polyolefin-based resin film has a static friction coefficient of not smaller than 0.2 and not larger than 1.5.

5. The polyolefin-based resin film according to any one of claims 1 to 4, wherein
   the polypropylene-based resin composition contains:

   in a total of 100 parts by weight of the polyolefin-based resin forming the polypropylene-based resin composition, not smaller than 3 parts by weight and not larger than 10 parts by weight of at least one type of a copolymer elastomer selected from the group consisting of an ethylene-propylene copolymer elastomer, a propylene-butene copolymer elastomer, an ethylene-butene copolymer elastomer, and a styrene-based copolymer elastomer.

6. A laminated body comprising:

   the polyolefin-based resin film according to any one of claims 1 to 5; and
   a biaxially oriented film formed from at least one type of a polymer selected from the group consisting of a polyamide-based resin film, a polyester-based resin film, and a polypropylene-based resin film.

7. A packaging body formed from the laminated body according to claim 6.

8. The packaging body according to claim 7, wherein
   "Nakiwakare" is not larger than 5 mm.

9. The packaging body according to claim 8 to be used for retort food.

## INTERNATIONAL SEARCH REPORT

International application No.

**PCT/JP2021/046572**

### A. CLASSIFICATION OF SUBJECT MATTER

***B32B 27/32***(2006.01)i; ***B65D 65/40***(2006.01)i; ***C08L 23/06***(2006.01)i; ***C08L 23/14***(2006.01)i; ***C08L 53/00***(2006.01)i; ***C08J 5/18***(2006.01)i

FI:   C08J5/18 CES; B32B27/32 103; C08L53/00; C08L23/14; C08L23/06; B65D65/40 D

According to International Patent Classification (IPC) or to both national classification and IPC

### B. FIELDS SEARCHED

Minimum documentation searched (classification system followed by classification symbols)

B32B27/32; B65D65/40; C08L23/06; C08L23/14; C08L53/00; C08J5/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2019-019197 A (FUTAMURA CHEMICAL CO LTD) 07 February 2019 (2019-02-07)<br>  claims, examples, entire text | 1-9 |
| A | WO 2019/123944 A1 (TOYOBO CO LTD) 27 June 2019 (2019-06-27)<br>  claims, examples, entire text | 1-9 |
| A | WO 2020/022060 A1 (TOYOBO CO LTD) 30 January 2020 (2020-01-30)<br>  claims, examples, entire text | 1-9 |
| A | WO 2019/225282 A1 (TORAY ADVANCED FILM CO., LTD.) 28 November 2019 (2019-11-28)<br>  claims, examples, entire text | 1-9 |
| A | CN 110641113 A (ZHUHAI DESHEN ENVIRONMENT-FRIENDLY PACKAGING CO., LTD.) 03 January 2020 (2020-01-03)<br>  claims, examples | 1-9 |
| A | WO 2017/098953 A1 (DAINIPPON INK & CHEMICALS) 15 June 2017 (2017-06-15)<br>  claims, examples, entire text | 1-9 |

☑ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **07 February 2022** | **22 February 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2021/046572**

**C.     DOCUMENTS CONSIDERED TO BE RELEVANT**

| Category* | Citation of document, with indication, where appropriate, of the relevant passages | Relevant to claim No. |
|---|---|---|
| P, A | WO 2021/200592 A1 (TOYOBO CO LTD) 07 October 2021 (2021-10-07) claims, examples, entire text | 1-9 |

Form PCT/ISA/210 (second sheet) (January 2015)

INTERNATIONAL SEARCH REPORT
Information on patent family members

International application No.

**PCT/JP2021/046572**

| Patent document cited in search report | | | Publication date (day/month/year) | Patent family member(s) | | | Publication date (day/month/year) |
|---|---|---|---|---|---|---|---|
| JP | 2019-019197 | A | 07 February 2019 | (Family: none) | | | |
| WO | 2019/123944 | A1 | 27 June 2019 | US | 2020/0392327 | A1 | |
| | | | | claims, examples | | | |
| | | | | EP | 3730541 | A1 | |
| | | | | KR | 10-2020-0098580 | A | |
| | | | | CN | 111511813 | A | |
| | | | | TW | 201930415 | A | |
| WO | 2020/022060 | A1 | 30 January 2020 | EP | 3831599 | A | |
| | | | | claims, examples | | | |
| | | | | CN | 112512806 | A | |
| | | | | KR | 10-2021-0038573 | A | |
| | | | | TW | 202014304 | A | |
| WO | 2019/225282 | A1 | 28 November 2019 | CN | 111757809 | A | |
| | | | | KR | 10-2021-0012996 | A | |
| | | | | TW | 202003245 | A | |
| CN | 110641113 | A | 03 January 2020 | (Family: none) | | | |
| WO | 2017/098953 | A1 | 15 June 2017 | KR | 10-2018-0092939 | A | |
| WO | 2021/200592 | A1 | 07 October 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5790497 B
- WO 2019123944 A1
- JP 2000186159 A